# EUROPEAN PATENT APPLICATION

(11) **EP 1 995 276 A1**
(43) Date of publication of application: **26.11.2008**
(21) Application number: 06729593.1
(22) Date of filing: 15.03.2006
(51) Int. Cl.: C08L 23/00, C08K 5/521

(54) **STABILIZED POLYOLEFIN RESIN AND METHOD OF STABILIZING POLYOLEFIN RESIN**

(71) Applicant: Johoku Chemical Co., Ltd., Chuo-ku, Tokyo 103-0025 (JP)
(72) Inventor: YAMAUCHI, Toshiyuki, Edokawa-ku, Tokyo 1340083 (JP); OSAMURA, Yoshikatsu, Kita-ku, Tokyo 1150052 (JP); KIMURA, Naoetsu, Tsukuba-gun, Ibaraki 3002498 (JP)
(74) Representative: Merkle, Gebhard
(86) International application number: PCT/JP2006/305626
(87) International publication number: WO 2007/108109

(57) **Abstract**

A polyolefin-based resin which has improved stability when used under acidic conditions, and which does not affect the growth of crops when employed as a polyolefin-based film for agricultural use. A Zn salt of a stearylphosphate ester is added as an acid stabilizer to a polyolefin-based resin that contains no ultraviolet absorber.

## Description

### Technical Field

The present invention relates to a stabilized polyolefin-based resin and to a polyolefin-based resin stabilization process. In particular, the invention relates to a stabilized polyolefin-based resin that can be advantageously used as a polyolefin-based film for agricultural use, as well as to a polyolefin-based resin stabilization process.

### Background Art

Polyolefin-based resin stabilizers commonly used in the prior art include hindered phenol-based, phosphorous acid ester-based and thioether-based antioxidants, employed mainly for the purpose of improving heat resistance, and benzotriazole-based, benzophenone-based and benzoate-based ultraviolet absorbers or hindered amine-based light stabilizers, for the purpose of improving weather resistance.

One of the uses of polyolefin-based resins is in the field of agricultural materials, as polyolefin-based films for agricultural use. When an ultraviolet absorber is added to a polyolefin-based film for agricultural use for the purpose of improving the weather resistance, it is known that the film absorbs ultraviolet rays often to an extent affecting growth of crops. The use of ultraviolet absorbers is therefore greatly restricted, and at the current time the primary methods employed involve addition of hindered amine-based light stabilizers.

Since fumigation with sulfur is often employed with polyolefin-based films for agricultural use in farming houses and the like, the surfaces of the polyolefin-based films for agricultural use become acidified inside the houses, thus significantly impairing the stability of the polyolefin-based resins. Another problem is deterioration of the resins under acidic conditions such as acid rain resulting from air pollution in the general environment.

Fumigation and acidification by air pollution are thought to occur due to production of H₂SO₃ and H₂SO₄ from SO₂ in the presence of oxygen and water. The phenomenon of polyolefin-based resin deterioration is attributed to accelerated decomposition of antioxidants upon contact with acids, or when hindered amine-based light stabilizers are used, it is attributed to reduced performance as a result of production of salts between the light stabilizers and acids.

Japanese Unexamined Patent Publication No. 63-175072 proposes an agricultural chemical-resistant film for use in agriculture, which comprises a hindered amine-based compound and a hydrotalcite compound, the stated purpose being to solve the problem of reduced weather resistance caused by acidic substances derived from agricultural chemicals. Also, Japanese Unexamined Patent Publication No. 8-48822 proposes a weather-resistant and agricultural chemical-resistant polyolefin film comprising a hindered amine and a metal oxide or hydroxide. Currently, however, it is still not possible to obtain polyolefin-based resins that are satisfactory in terms of stability when used under acidic conditions.

On the other hand, as a method for improving weather resistance of polyolefin-based resins, Japanese Unexamined Patent Publication No. 7-163247 discloses combinations of acidic phosphoric acid ester metal salts with polyolefin-based resins. This publication teaches that it is possible to impart sufficient weather resistance by using a hindered amine-based light stabilizer and a benzotriazole-based, benzophenone-based or benzoate-based ultraviolet absorber, and that the weather resistance can be maintained for long periods by using a metal salt of an acidic phosphoric acid ester. However, the process absolutely requires the use of a light stabilizer and ultraviolet absorber as weather resistance improvers, thus making it impossible to avoid the effects of the ultraviolet absorber on the growth of crops, and while the publication also discloses auxiliary addition of a metal salt of a phosphoric acid ester, it does not mention stability with use under acidic conditions.

### Disclosure of the Invention

It is an object of the present invention to solve the aforementioned problems of the prior art by providing a polyolefin-based resin which has improved stability when used under acidic conditions, and which does not affect the growth of crops when employed as a polyolefin-based film for agricultural use.

As a result of much diligent research directed toward solving the aforementioned problems, the present inventors have found that a polyolefin-based resin exhibiting excellent stability even under acidic conditions can be obtained by adding a specific phosphoric acid ester metal salt to a polyolefin-based resin.

As a result of still further research, the present inventors also found that a polyolefin-based resin with yet superior stability can be obtained by using a hindered amine-based light stabilizer as a weather resistance improver in addition to the phosphoric acid ester metal salt.

The present invention therefore provides the following polyolefin-based resin and polyolefin-based resin stabilization process.
1. A polyolefin-based resin that is stabilized for use under acidic conditions, obtained by adding a Zn salt of a stearylphosphate ester as an acid stabilizer to a polyolefin-based resin that contains no ultraviolet absorber.
2. A polyolefin-based resin according to 1. above, wherein a hindered amine-based light stabilizer is added as a weather resistance improver.
3. A polyolefin-based resin according to 1. or 2. above, wherein the polyolefin-based resin is polyethylene for agricultural use.
4. A process for stabilizing a polyolefin-based resin for use under acidic conditions, which includes adding a Zn salt of a stearylphosphate ester as an acid stabilizer to a polyolefin-based resin that contains no ultraviolet absorber.
5. The process of 4. above, wherein a hindered amine-based light stabilizer is added as a weather resistance improver to the polyolefin-based resin containing no ultraviolet absorber, in addition to the Zn salt of the stearylphosphate ester.
6. The process of 4. or 5. above, wherein the polyolefin-based resin is polyethylene for agricultural use.

According to the invention there is provided a polyolefin-based resin which has excellent stability when used under acidic conditions, and which does not affect the growth of crops when employed as a polyolefin-based film for agricultural use.

### Best Mode for Carrying Out the Invention

Preferred modes of the invention will now be explained in detail with the understanding that the invention is not limited only to these modes.

According to the invention, the Zn salt of the stearylphosphate ester (alternative name: octadecylphosphate ester) used as an acid stabilizer is used in an amount of preferably 0.1-10 parts by mass and even more preferably 0.1-5 part by mass with respect to 100 parts by mass of the polyolefin-based resin.

This will yield a polyolefin-based resin with excellent stability (durability) under acidic conditions. An amount of less than 0.1 part by mass may not produce an effect for practical use, while an amount exceeding 10 parts by mass may affect the smoothness of the resin surface and is also economically disadvantageous.

The stearylphosphate ester in the Zn salt of the stearylphosphate ester is represented by the following formula [I] or [II].

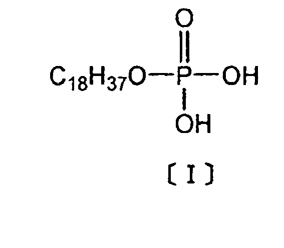

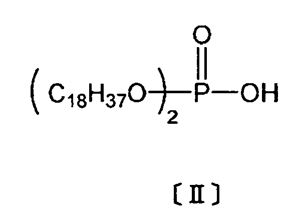

These stearylphosphate esters can be obtained by reacting stearyl alcohol with phosphoric anhydride for phosphate esterification, and a Zn salt can then be formed by an ordinary method such as neutralization reaction or metathetical reaction.

Commonly known and used antioxidants may of course be added in the basic formulation of the polyolefin-based resin that is to be stabilized by addition of the Zn salt of the stearylphosphate ester, but depending on the environment, there is no problem with also adding a light stabilizer or the like to further improve the weather resistance.

As useful polyolefin-based resins for the invention there may be mentioned resins composed mainly of homopolymers of olefins such as ethylene, propylene and butene, copolymers of two or more of these olefins, or copolymers of these olefins with vinyl compounds, and as polyethylenes for agricultural use there may be mentioned polyethylene compounds composed mainly of polyethylene, linear low-density polyethylene, linear ethylene-α-olefin copolymers, ethylene-vinyl acetate copolymers and the like, either alone or in combinations.

When a hindered amine-based light stabilizer is added alone to the polyolefin-based resin, its performance is significantly impaired when used under acidic conditions, but by using a hindered amine-based light stabilizer in combination with a Zn salt of a stearylphosphate ester as according to the invention, the light stability is drastically improved when the resin is used under acidic conditions. As typical examples of compounds that are useful as hindered amine-based light stabilizers there may be mentioned bis(2,2,6,6-tetramethyl-4-piperidyl)sebacate, bis(1,2,2,6,6-pentamethyl-4-piperidyl)sebacate, bis(1,2,2,6,6-pentamethyl-4-piperidyl)-2-(3,5-di-t-butyl-4-hydroxybenzyl)-2-n-butyl malonate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butanetetracarboxylate, blended 2,2,6,6-tetramethyl-4-piperidyl/tridecyl-1,2,3,4-butane tetracarboxylate, blended 1,2,2,6,6-pentamethyl-4-piperidyl/tridecyl-1,2,3,4-butane tetracarboxylate, blended [2,2,6,6-tetramethyl-4-piperidyl/β,β,β',β'-tetramethyl-3,9-{2,4,8,10-tetraoxospiro(5,5)undecane}diethyl]-1,2,3,4-butane tetracarboxylate, blended [1,2,2,6,6-pentamethyl-4-piperidyl/β,β,β',β'-tetramethyl-3,9-{2,4,8,10-tetraoxospiro(5,5)undecane}diethyl]-1,2,3,4-butane tetracarboxylate, 4-benzoyloxy-2,2,6,6-tetramethylpiperidine, dimethyl-1-(2-hydroxyethyl)-4-hydroxy-2,2,6,6-tetramethylpiperidine succinate polycondensate and poly[{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino]; however, there is no limitation to these.

The hindered amine-based light stabilizer is preferably used in an amount of 0.05-5 parts by mass and especially 0.1-1 part by mass with respect to 100 parts by mass of the polyolefin-based resin. At less than 0.05 part by mass the stabilizing effect may not be satisfactory, while an amount of greater than 5 parts by mass is not economically advantageous because no superior effect is achieved.

The invention will now be explained in greater detail by examples and comparative examples. The "parts" and "%" values in the examples are parts by mass and mass%, respectively.

### Examples 1, 2 and Comparative Examples 1-10

Resins prepared according to basic formulations I and II were used for molding with an blown film molding machine at a temperature of 180°C, to obtain films each with a thickness of 100 µm.

| Basic formulation I | |
|---|---|
| Ethylene-based copolymer^{*1} | 100 parts |
| Phenol-based antioxidant^{*2} | 0.1 part |
| Phosphorus-based antioxidant^{*3} | 0.05 part |
| Inorganic compound^{*4} | 8 parts |
| Acid stabilizer^{*5} | 0.4 part |

| Basic formulation II | |
|---|---|
| Ethylene-based copolymer^{*1} | 100 parts |
| Phenol-based antioxidant^{*2} | 0.1 part |
| Phosphorus-based antioxidant^{*3} | 0.05 part |
| Inorganic compound^{*4} | 8 parts |
| Hindered amine-based light stabilizer^{*6} | 0.2 part |
| Acid stabilizer^{*5} | 0.4 part |

| | |
|---|---|
| Notes: *1: 25% Polyethylene (metallocenepolyethylene KF282) (product of Japan Polyethylene Corp.), 75% Ethylene-vinyl acetate copolymer (NOVATEC EVA LV 430) ((vinyl acetate content: 15%) (product of Japan Polyethylene Corp.) *2: Irganox 1076 (octadecyl-3-(3,5-di-t-butyl-4-hydroxyphenyl)propionate) (product of Ciba Specialty Chemicals, Inc.) *3: JP-650 (tris(2,4-di-t-butylphenyl)phosphite) (product of Johoku Chemical Co., Ltd.) *4: Hydrotalcite DHT4A (product of Kyowa Chemical Industry Co., Ltd.) *5: Comparative Examples 1, 7: No addition Examples 1, 2: Zn salt of stearylphosphate ester Comparative Examples 2, 8: bis(2,2,6,6-Tetramethyl-4-piperidyl)sebacate Comparative Examples 3, 9: Poly[{6-1,1,3,3-tetramethylbutyl)amino-1,3,5-triazine-diyl}{(2,2,6,6-tetramethyl-4-piperidyl)imino}hexamethylene{(2,2,6,6-tetramethyl-4-piperidyl)imino}] Comparative Examples 4, 10: Calcium carbonate Comparative Examples 5, 11: Titanium oxide Comparative Examples 6, 12: Ca salt of stearylphosphate ester *6: Dimethyl-1-(2-hydroxyethyl)-4-hydroxy-2,2,6,6-tetramethylpiperidine succinate polycondensate | |

The obtained films were evaluated by the following method.

### Evaluation method

Fumigation test: Each film was used to cover a mini-house (base: 80 cm x 150 cm, height: 60 cm) by Marui Kako Co., Ltd., set in a test field in Tsutsudo, Yawaramura, Ibaraki Prefecture, and 5 g of sulfur was heated on a hot plate set in the mini-house for 1.5 hours of fumigation.

The fumigation frequency was once per week, sampling the exposed film every 3 months, and each film sample was observed for changes in outer appearance (whitening or embrittlement of the surface), while the tensile breaking elongation in the transverse direction was also measured according to JIS K6781 and the overall fumigation resistance was evaluated on the following scale.
VG: No change in outer appearance, ductility retention: ≥80%.
G: Slight change in outer appearance, ductility retention: at least 60% and less than 80%.
F: Distinct change in outer appearance, ductility retention: at least 40% and less than 60%.
P: Significant change in outer appearance, ductility retention: <40%.

The results are shown in Tables 1 and 2 below.

**Table 1**

| Composition | | Basic formulation I | | | | | | |
|---|---|---|---|---|---|---|---|---|
| Example No. | | Comp. Ex. 1 | Example 1 | Comp. Ex. 2 | Comp. Ex. 3 | Comp. Ex. 4 | Comp. Ex. 5 | Comp. Ex. 6 |
| Outer appearance | 3 months | G | VG | VG | VG | G | G | G |
| | 6 months | F | G | F | F | F | F | F |
| | 9 months | P | F | P | P | P | P | P |
| Ductility retention | 3 months | G | VG | VG | VG | G | G | G |
| | 6 months | F | G | F | G | F | F | F |
| | 9 months | P | F | P | P | P | P | P |

**Table 2**

| Composition | | Basic formulation II | | | | | | |
|---|---|---|---|---|---|---|---|---|
| Example No. | | Comp. Ex. 7 | Example 2 | Comp. Ex. 8 | Comp. Ex. 9 | Comp. Ex. 10 | Comp. Ex. 11 | Comp. Ex. 12 |
| Outer appearance | 3 months | VG | VG | VG | VG | VG | VG | VG |
| | 6 months | F | VG | G | G | F | F | F |
| | 9 months | P | G | P | P | P | P | P |
| Ductility retention | 3 months | VG | VG | VG | VG | VG | VG | VG |
| | 6 months | G | VG | G | G | G | G | G |
| | 9 months | P | VG | F | F | P | P | P |

### Industrial Applicability

The present invention can provide a polyolefin-based resin which has excellent stability when used under acidic conditions, and which does not affect the growth of crops when employed as a polyolefin-based film for agricultural use, and it can therefore be advantageously employed in industry.

## Claims

1. A polyolefin-based resin that is stabilized for use under acidic conditions, obtained by adding a Zn salt of a stearylphosphate ester as an acid stabilizer to a polyolefin-based resin that contains no ultraviolet absorber.

2. A polyolefin-based resin according to claim 1, wherein a hindered amine-based light stabilizer is added as a weather resistance improver.

3. A polyolefin-based resin according to claim 1 or 2, wherein the polyolefin-based resin is polyethylene for agricultural use.

4. A process for stabilizing a polyolefin-based resin for use under acidic conditions, which includes adding a Zn salt of a stearylphosphate ester as an acid stabilizer to a polyolefin-based resin that contains no ultraviolet absorber.

5. A process according to claim 4, wherein a hindered amine-based light stabilizer is added as a weather resistance improver to the polyolefin-based resin containing no ultraviolet absorber, in addition to the Zn salt of the stearylphosphate ester.

6. A process according to claim 4 or 5, wherein the polyolefin-based resin is polyethylene for agricultural use.
